# DEMANDE DE BREVET EUROPEEN

(11) **EP 2 068 411 A1**
(43) Date de publication de la demande: **10.06.2009**
(21) Numéro de dépôt: 08290989.6
(22) Date de dépôt: 21.10.2008
(51) Int. Cl.: H02G 3/16

(54) **Apareillage électrique encastré à connexion rapide**

(30) Priorité: 04.12.2007 FR 0708468
(71) Demandeur: LEGRAND FRANCE, 87000 Limoges (FR); LEGRAND SNC, 87000 Limoges (FR)
(72) Inventeur: Mondary, Philippe, 87700 Saint Priest-sous-Aixe (FR); Tribout, Tristan, 22540 Louargat (FR)
(74) Mandataire: Orsini, Fabienne

(57) **Abrégé**

L'invention concerne une boîte (100) d'encastrement d'un appareillage électrique, comprenant un fond (101) qui délimite, à l'arrière, un espace intérieur de réception d'un socle de mécanisme d'appareillage, ce fond étant pourvu d'une ouverture (110) destinée à accueillir, par l'arrière de ladite boîte, un connecteur électrique (200) de sorte qu'une partie (230) de ce connecteur émerge dans ledit espace intérieur.

Selon l'invention, ledit fond comporte des moyens de retenue (130) adaptés à lier ledit connecteur électrique audit fond tout en autorisant un déplacement dudit connecteur électrique dans ladite ouverture par rapport audit fond.

L'invention concerne également un connecteur électrique spécialement adapté à coopérer avec ladite boîte conforme à l'invention, un mécanisme d'appareillage destiné à être rapporté dans ladite boîte pour être connecté audit connecteur électrique. Elle concerne enfin un ensemble électrique comprenant une telle boîte, un tel connecteur électrique et un tel mécanisme d'appareillage.

## Description

La présente invention concerne de manière générale le raccordement électrique au réseau des appareillages électriques encastrés.

Elle concerne plus particulièrement une boîte d'encastrement d'un appareillage électrique, comprenant un fond qui délimite, à l'arrière, un espace intérieur de réception d'un socle de mécanisme d'appareillage, ce fond étant pourvu d'une ouverture destinée à accueillir, par l'arrière de ladite boîte, un connecteur électrique de sorte qu'une partie de ce connecteur émerge dans ledit espace intérieur.

Elle concerne également un connecteur électrique à emmancher sur une extrémité d'un câble électrique d'alimentation, spécialement adapté à la boîte d'encastrement précitée ainsi qu'un mécanisme d'appareillage destiné à recevoir ce connecteur électrique.

Elle concerne enfin un ensemble électrique comprenant une telle boîte électrique, un tel connecteur électrique ainsi qu'un tel mécanisme d'appareillage.

L'invention trouve une application particulièrement avantageuse dans la réalisation d'un système électrique à connexion rapide au réseau électrique.

### ARRIERE-PLAN TECHNOLOGIQUE

On connaît déjà du document GB 2 430 087 une boîte d'encastrement du type précité dans laquelle l'ouverture est une simple ouverture rectangulaire destinée à recevoir de manière fixe un connecteur intermédiaire dont une partie, qui émerge à l'intérieur de ladite boîte d'encastrement, est adaptée à être connectée aux composants électriques d'un mécanisme d'appareillage rapporté dans ladite boîte, et dont une autre partie, située à l'extérieur de ladite boîte, du côté de sa face arrière, est adaptée à recevoir au moins un autre connecteur électrique emmanché sur l'extrémité d'un câble électrique.

Selon ce document, la connexion électrique entre lesdits composants électriques du mécanisme d'appareillage est réalisée soit par l'intermédiaire de conducteurs électriques souples, soit par l'enfichage dans ledit connecteur intermédiaire d'un connecteur complémentaire prévu à l'arrière du mécanisme.

La connexion par l'intermédiaire de conducteurs souples est longue et fastidieuse à réaliser. En outre, elle ne présente pas un haut niveau de sécurité.

Dans le cas où la connexion entre le mécanisme d'appareillage et le connecteur intermédiaire est réalisée via l'enfichage d'un connecteur prévu sur le mécanisme d'appareillage, le montage fixe par encliquetage du connecteur intermédiaire dans l'ouverture rectangulaire du fond de la boîte d'encastrement impose la manière dont le mécanisme d'appareillage doit être positionné dans ladite boîte pour que son connecteur puisse coopérer correctement avec ledit connecteur intermédiaire. Ce montage fixe empêche alors un installateur d'ajuster la position du mécanisme d'appareillage dans ladite boîte pour rattraper un défaut d'orientation par rapport à l'horizontale de la boîte dans le trou d'encastrement (rattrapage d'aplomb) ou pour ajuster l'enfoncement du mécanisme d'appareillage dans ladite boîte afin d'appuyer correctement le support du mécanisme d'appareillage contre la face avant de la boîte d'encastrement ou contre la face avant de la paroi d'encastrement (rattrapage de profondeur).

### OBJET DE L'INVENTION

Afin de remédier aux inconvénients précités de l'état de la technique précité, la présente invention propose une boîte d'encastrement telle que définie dans la revendication 1,

Ainsi, avantageusement grâce à l'invention, un éventuel défaut d'orientation par rapport à l'horizontale ou un éventuel défaut d'enfoncement de ladite boîte d'encastrement dans son trou d'encastrement peut être facilement rattrapé par un installateur lors du montage dans ladite boîte d'un socle de mécanisme d'appareillage.

En effet, grâce auxdits moyens de retenue particuliers de la boîte d'encastrement conforme à l'invention qui autorisent un déplacement par rapport à son fond du connecteur électrique rapporté par l'arrière dans ladite ouverture, un installateur peut de manière simple et rapide enficher un connecteur appartenant au mécanisme d'appareillage sur ledit connecteur électrique lié à ladite boîte, puis il peut ajuster la position du mécanisme d'appareillage lié audit connecteur électrique dans ladite boîte en déplaçant ce dernier par rapport au fond de ladite boîte pour effectuer les rattrapages d'aplomb ou de profondeur nécessaires au bon positionnement de l'appareillage électrique dans la paroi d'encastrement.

D'autres caractéristiques non limitatives et avantageuses de la boîte d'encastrement conforme à l'invention sont énoncées dans les revendications 2 à 16.

L'invention concerne également un connecteur électrique selon la revendication 17.

D'autres caractéristiques non limitatives et avantageuses du connecteur électrique selon l'invention sont énoncées dans les revendications 18 à 33.

L'invention concerne également un mécanisme d'appareillage qui comporte un socle isolant renfermant des composants électriques et comprenant à l'arrière des moyens de réception du bornier du connecteur électrique selon l'invention.

D'autres caractéristiques non limitatives et avantageuses du mécanisme d'appareillage selon l'invention sont énoncées dans les revendications 35 à 41.

Enfin l'invention concerne un ensemble électrique à connexion rapide, comprenant :
- une boîte d'encastrement selon l'invention,
- un connecteur électrique selon l'invention emmanché sur une extrémité d'un câble électrique d'alimentation, à rapporter par l'arrière de ladite boîte d'encastrement dans ladite ouverture dudit fond de telle manière que ledit connecteur est retenu sur la face externe dudit fond par la coopération des moyens de montage dudit connecteur avec lesdits moyens de retenue de ladite boîte, et
- un mécanisme d'appareillage selon l'invention dont le socle est adapté, d'une part, à être monté sur un support d'appareillage à rapporter à l'avant de ladite boîte d'encastrement, et, d'autre part, à être engagé dans l'espace intérieur de ladite boîte d'encastrement de façon à recevoir à l'arrière ledit bornier du connecteur électrique.

### DESCRIPTION DETAILLEE D'UN EXEMPLE DE REALISATION

La description qui va suivre en regard des dessins annexés, donnée à titre d'exemple non limitatif, fera bien comprendre en quoi consiste l'invention et comment elle peut être réalisée.

Sur les dessins annexés :
- la figure 1 est une vue schématique en perspective de dessus d'une boîte d'encastrement conforme à l'invention ;
- la figure 2 est une vue schématique en perspective d'un connecteur électrique conforme à l'invention, emmanché sur l'extrémité d'un câble électrique ;
- la figure 3 est une vue schématique en perspective du connecteur de la figure 2 ;
- la figure 4 est une vue schématique de face de la boîte d'encastrement de la figure 1 sur le fond de laquelle est monté le connecteur électrique de la figure 3 ;'
- la figure 5 est une vue en coupe selon le plan B-B de la figure 4 ;
- la figure 6 est une vue du détail C de la figure 5 ;
- la figure 7 est une vue schématique de face de la boîte d'encastrement de la figure 1 sur le fond de laquelle est bloqué dans une position déterminée le connecteur électrique de la figure 3 ;
- la figure 8 est une vue en coupe selon le plan A-A de la figure 7 ;
- la figure 9 est une vue du détail D de la figure 8 ;
- la figure 10 est une vue schématique de face d'un mécanisme d'appareillage selon l'invention, monté sur un support d'appareillage rapporté à l'avant de la boîte d'encastrement de la figure 7 ;
- la figure 11 est une vue en coupe selon le plan C-C de la figure 10 ;
- la figure 12 est une vue en coupe selon le plan D-D de la figure 10 ;
- la figure 13 est une vue schématique de face du mécanisme d'appareillage de la figure 10 dont l'orientation par rapport à l'horizontale et dont l'enfoncement dans ladite boîte d'encastrement ont été ajustés après avoir été connecté audit connecteur électrique rapporté sur le fond de la boîte ;
- la figure 14 est une vue en coupe selon le plan E-E de la figure 13 ; et
- la figure 15 est une vue du détail B de la figure 14.

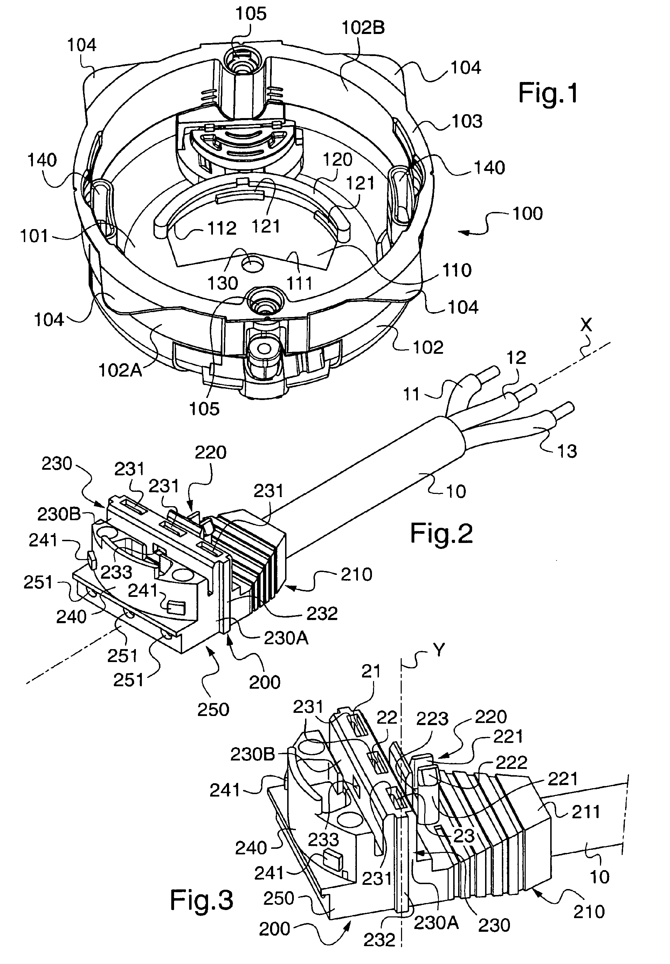

Sur la figure 1, on a représenté une boîte 100 d'encastrement d'un appareillage électrique 300, 400 dans une paroi quelconque.

Ici, cette boîte est une boîte à fixation par griffes, destinée à être encastrée dans une paroi creuse comme une paroi alvéolaire.

En variante, il peut s'agir d'une boîte solidarisée par collage dans une paroi creuse ou une paroi de plâtre ou encore une boîte à sceller dans une paroi béton.

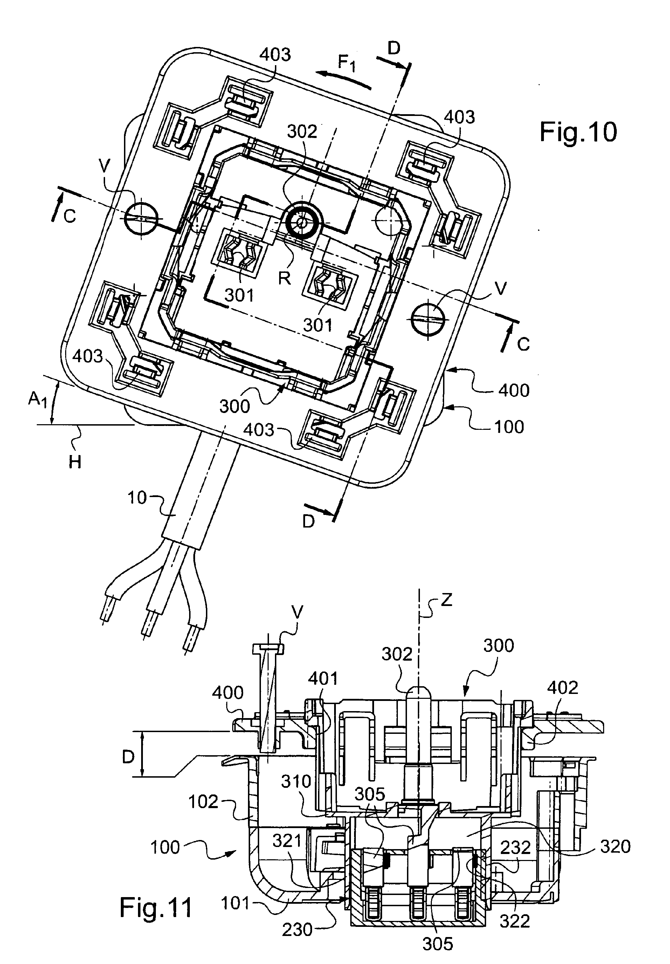

De manière classique, cette boîte 100 comporte un fond 101 qui délimite, à l'arrière, un espace intérieur de réception d'un socle 310 de mécanisme d'appareillage 300 (voir figure 11). Cet espace intérieur est délimité latéralement par une paroi latérale 102, ici une paroi cylindrique qui borde le fond 101 circulaire.

La paroi latérale 102 s'élève perpendiculairement au fond 101. Elle se raccorde ici au fond 101 par un arrondi de sorte qu'il y a une continuité sans arête ni cassure entre le fond 101 et la paroi latérale 102 de la boîte 100.

À l'avant, la boîte 100 est ouverte pour recevoir le mécanisme d'appareillage 300. L'ouverture avant de la boîte 100 est bordée par un rebord 103 comportant des oreilles 104 régulièrement réparties sur le pourtour de ladite boîte 100 et destinées avantageusement à prendre appui contre la face avant de la paroi d'encastrement (non représentée).

La face intérieure 102B de la paroi latérale 102 de la boîte 100 porte deux puits 105 diamétralement opposés adaptés à recevoir des vis (non représentées) d'actionnement de griffes (non représentées) logées dans des logements prévus en renfoncement de la face externe 102A de ladite paroi latérale 102.

De manière usuelle, le vissage des vis (non représentées) dans les puits 105 correspondants de la boîte 100 provoque, dans un premier temps, la sortie des griffes (non représentées) de leur logement pour les placer en saillie de la face externe 102A de la paroi latérale 102 de la boîte 100, et, dans un deuxième temps, le déplacement desdites griffes en saillie le long des corps filetés desdites vis pour venir les bloquer contre la face arrière de la paroi d'encastrement (non représentée).

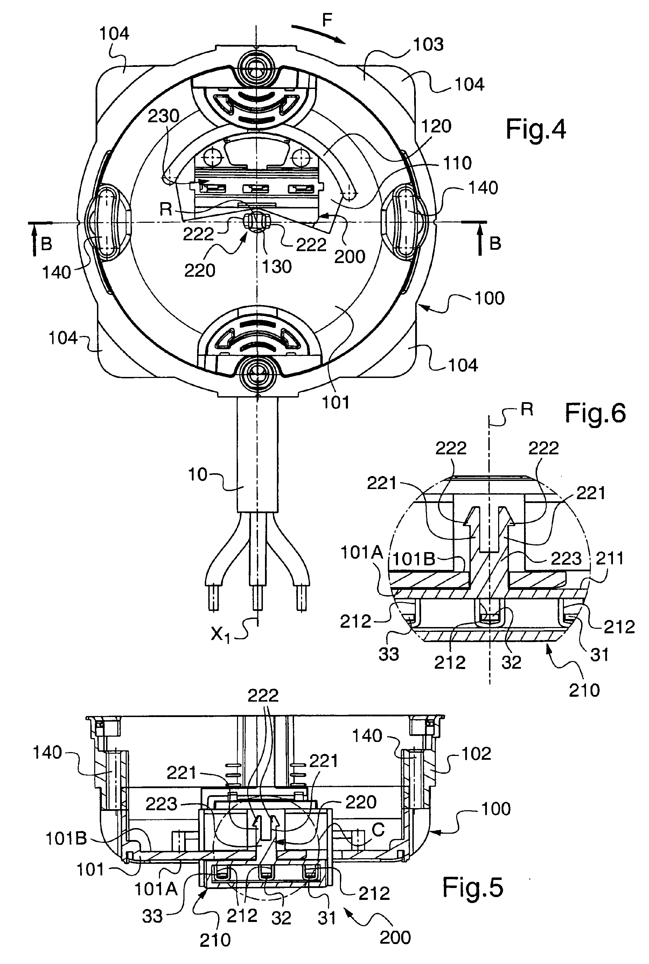

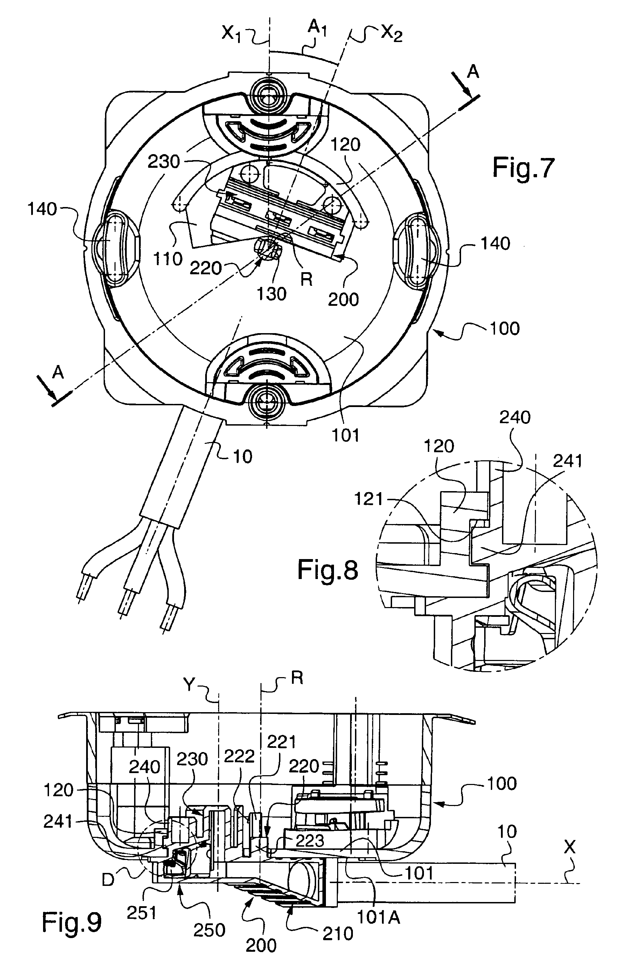

Selon une caractéristique particulièrement avantageuse de la boîte 100 conforme à l'invention, le fond 101 est pourvu d'une ouverture 110 destinée à accueillir, par l'arrière de ladite boîte, un connecteur électrique 200 de sorte qu'une partie 230 de ce connecteur émerge dans ledit espace intérieur de la boîte 100 (voir figures 4 et 8).

Sur les figures 2 et 3, on a représenté le connecteur électrique 200 qui, conformément à l'invention, est particulièrement adapté à la boîte 100.

Ce connecteur électrique 200 comprend, d'une part, une enveloppe isolante qui forme d'une seule pièce, à l'arrière, un manchon 210 d'axe X de réception d'une extrémité d'un câble électrique 10 et, à l'avant, un bornier 230 qui s'étend globalement sensiblement selon un axe Y perpendiculaire à l'axe X dudit manchon 210.

Comme le montre plus particulièrement la figure 5, le manchon 210 comporte intérieurement trois conduits 212 parallèles, isolés les uns des autres, qui sont destinés à recevoir les âmes dénuées des trois conducteurs 11, 12, 13 de phase, de neutre et de terre du câble électrique 10.

Le bornier 230 est un bloc isolant parallélépipédique qui comprend trois conduits 231 parallèles entre eux, s'étendant selon l'axe Y perpendiculaire à l'axe X du manchon 210. Ces conduits 231 débouchent à l'extérieur de ladite enveloppe isolante du connecteur électrique 200 et communiquent à l'intérieur de ladite enveloppe isolante avec les conduits 212 du manchon 210.

Les conduits 231 du bornier 230 logent des lames conductrices 21, 22, 23 en matière métallique. Une extrémité 31, 32, 33 de chaque lame conductrice 21, 22, 23 est accessible via l'un des conduits 212 du manchon 210 de sorte que l'âme dénudée de chaque conducteur 11, 12, 13 du câble électrique 10 emmanché dans ledit manchon 210, vient au contact d'une lame conductrice 21, 22, 23 du bornier 230.

Selon une caractéristique essentielle de la boîte 100, le fond 101 comporte des moyens de retenue 130 adaptés à lier ledit connecteur électrique 200 au fond 101 tout en autorisant un déplacement dudit connecteur électrique 200 dans ladite ouverture 110 par rapport à ce fond 101.

Un des déplacements autorisés par lesdits moyens de retenue 130 prévus sur la boîte 100 est un déplacement dans un plan parallèle au plan formé par ledit fond 101 (voir figures 4 et 7). Il s'agit ici d'un pivotement autour d'un axe R perpendiculaire au plan formé par ledit fond 101.

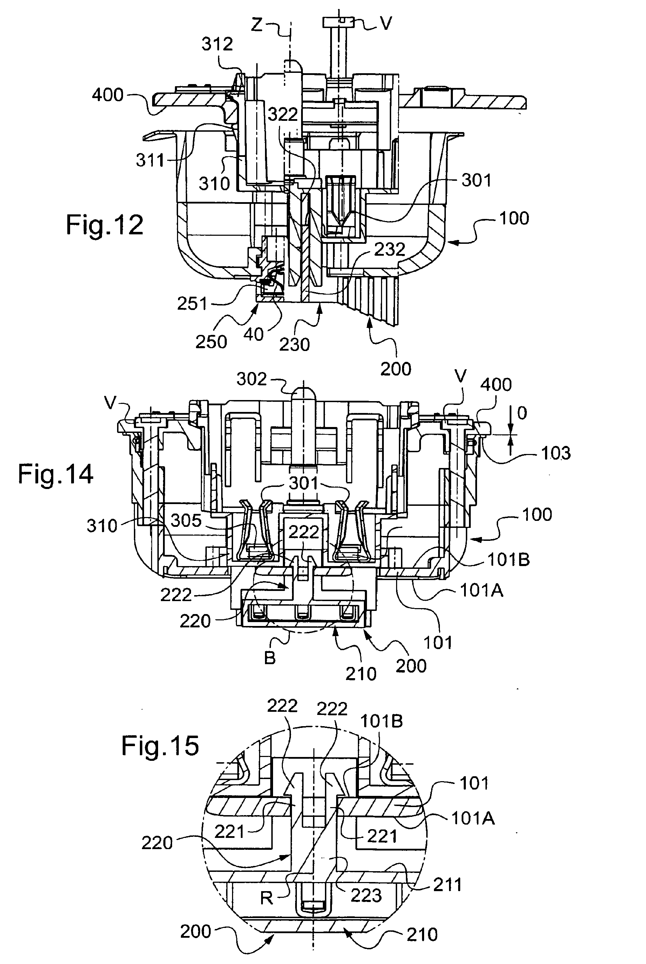

Un autre déplacement autorisé par lesdits moyens de retenue 130 de la boîte 100 est une translation suivant une direction perpendiculaire (axe R) au plan formé par ledit fond 101 (voir figures 5 et 14).

En correspondance, le connecteur électrique 200 comporte des moyens de montage 220, prévus sur la face externe 211 du manchon 210, adaptés à coopérer avec lesdits moyens de retenue 130 de la boîte 100 pour le montage dudit connecteur électrique 200 sur la face externe 101A du fond 101 de ladite boîte 100 de telle manière que ledit bornier 230 émerge, via ladite ouverture 110 prévue dans le fond 101 de la boîte 100, dans l'espace intérieur de ladite boîte (voir les figures 4 à 6).

Selon l'exemple représenté sur les figures, lesdits moyens de retenue 130 de la boîte 100 comprennent au moins un élément femelle placé à proximité d'un bord 111 de ladite ouverture 110 et adapté à recevoir un élément mâle 220 prévu sur ledit connecteur électrique 200.

Plus particulièrement, l'élément femelle de la boîte 100 est un orifice 130 traversant le fond 101 de ladite boîte 100. Ici, l'orifice 130 est un orifice circulaire.

Comme le montre plus particulièrement la figure 3, selon l'exemple représenté, lesdits moyens de montage 220 du connecteur électrique 200 comprennent un élément mâle qui comporte ici deux pattes 221 parallèles à l'axe Y perpendiculaire à l'axe X dudit manchon 210. Ces pattes 221 comprennent deux faces externes tournées à l'opposé l'une de l'autre qui portent, à proximité de l'extrémité libre desdites pattes, une dent d'accrochage 222. En outre, lesdites pattes 221 présentent une base solidarisée à un plot rigide 223.

La section circulaire du plot rigide 223 surmonté des pattes 221 présente un diamètre égal au jeu près au diamètre de l'orifice 130 circulaire de la boîte 100, les dents d'accrochage 222 s'étendant en dehors de cette section circulaire.

Ici, la hauteur prise à partir de la base du plot rigide 223 solidarisée à la face externe 211 du manchon 210 jusqu'à la face d'accrochage des dents d'accrochage 222 est de l'ordre de 5 millimètres.

Ainsi, comme le montrent les figures 5 à 7, le montage du connecteur électrique 200 sur la face externe 101A du fond 101 de la boîte 100 s'effectue en engageant à force les pattes 221 desdits moyens de montage 220 au travers de l'orifice 130 circulaire de la boîte 100.

Lors du montage, lesdites pattes 221 fléchissent légèrement l'une vers l'autre pour permettre le passage des dents d'accrochage 222 au travers de l'orifice 130 du fond 101 de la boîte 100.

Pour faciliter leur introduction au travers de cet orifice 130, les dents d'accrochage 222 comportent un pan incliné extérieur qui glisse contre le bord dudit orifice 130 et qui provoque progressivement le fléchissement l'une vers l'autre desdites pattes 221.

Lorsque lesdites dents d'accrochage 222 ont traversé l'orifice 130 du fond 101 de la boîte 100, les pattes 221 reviennent élastiquement dans leur position initiale parallèles l'une à l'autre et le plot rigide 223 prévu à la base des pattes 221 s'engage dans l'orifice 130 jusqu'à ce que la face externe 211 du manchon 210 vienne au contact de la face externe 101A du fond 101 de la boîte 100 (voir figure 6).

Dans cette position de montage, le bornier 230 du connecteur électrique 200 émerge dans l'espace intérieur de la boîte 100 au travers de l'ouverture 110 prévue dans le fond 101. Le bornier 230 s'étend selon l'axe Y perpendiculairement au fond 101 de la boîte 100, parallèlement à l'axe R de pivotement dudit connecteur électrique 200 (voir figure 8). Cet axe R correspond à l'axe du plot rigide 223 de section circulaire (voir figure 6). Le plot rigide 223 forme un tourillon de pivotement dans ledit orifice 130 pour autoriser le déplacement du connecteur électrique 200 dans ladite ouverture 110 parallèlement au plan du fond 101 de la boîte 100. Le connecteur électrique 200 peut prendre alors plusieurs positions angulaires déterminées autour de l'axe R (voir figures 4 et 7).

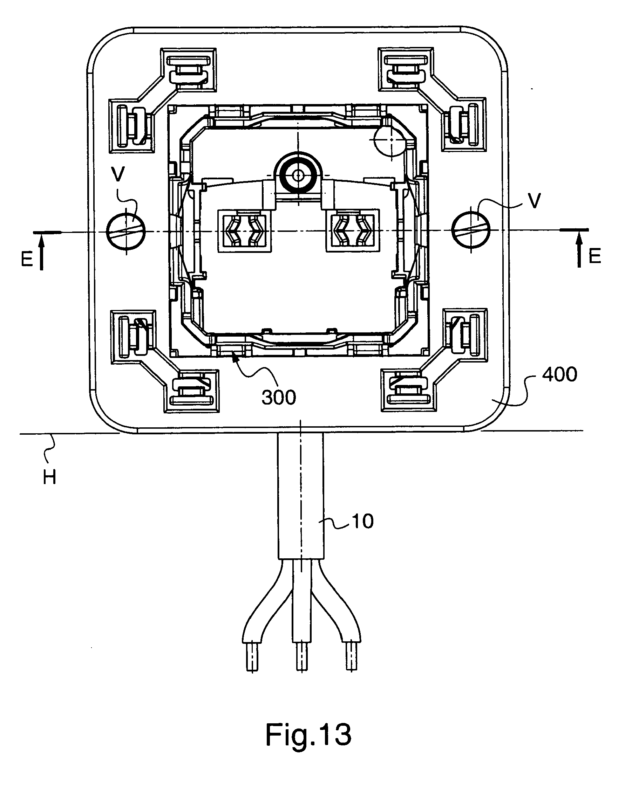

En outre, en poussant le bornier 230 du connecteur électrique 200 vers l'extérieur de la boîte 100, on fait coulisser le plot rigide 223 dans ledit orifice 130, selon son axe R perpendiculaire au plan du fond 101. Le connecteur électrique 200 peut alors prendre plusieurs positions parallèlement au plan de la face externe 101A du fond 101. Ces positions sont comprises entre deux positions extrêmes. La première position extrême, représentée sur les figures 5 et 6, est la position dans laquelle le manchon 210 du connecteur électrique 200 est plaqué contre la face externe 101A du fond 101 de la boîte 100. La deuxième position extrême, représentée sur les figures 14 et 15, est la position dans laquelle les dents d'accrochage 222 des moyens de montage 220 du connecteur électrique 200 sont en appui contre la face intérieure 101 B du fond 101 de la boîte 100 sur le bord de l'orifice 130 afin de retenir le connecteur électrique 200 sur la boîte 100. La distance séparant les deux positions extrêmes est égale à environ 5 millimètres.

Selon une caractéristique particulièrement avantageuse de la boîte 100, celle-ci comporte des moyens de blocage 121 du connecteur électrique 200 dans une position déterminée par rapport au fond 101.

lci, lesdits moyens de retenue 130 et lesdits moyens de blocage 121 de la boîte 100 sont distincts les uns des autres.

Comme le montrent plus particulièrement les figures 1, 8 et 9, selon le mode de réalisation de l'invention représenté, les moyens de blocage comprennent au moins une rainure 121 disposée sur un bord 112 de ladite ouverture 110 du fond 101, adaptée à recevoir une nervure 241 prévue en saillie sur ledit connecteur électrique 200.

Ici, il est prévu deux rainures 121 alignées suivant un arc de cercle et espacées l'une de l'autre d'un angle égal à environ 20 degrés.

Chaque rainure 121 de la boîte 100 est avantageusement formée en creux dans une paroi de guidage 120 prévue sur ledit fond 101, à l'intérieur de ladite boîte 100, le long d'au moins une partie du bord 112 de ladite ouverture 110 pour guider ledit connecteur électrique 200 lors de son déplacement.

Préférentiellement, l'ouverture 110 prévue dans le fond 101 de la boîte 100 comporte un bord 112 en arc de cercle le long duquel sont disposés lesdits moyens de blocage. La paroi de guidage 120 s'étend le long de ce bord 112 en arc de cercle et comporte en creux sur sa face tournée vers ladite ouverture 110 les deux rainures 121 de blocage.

Comme énoncé ci-dessus, en correspondance des moyens de blocage 121 de la boîte 100, le connecteur électrique 200 comprend des moyens de blocage 241 pour le bloquer dans une position déterminée dans ladite ouverture 110 du fond 101 de ladite boîte 100.

Ici également, dans le connecteur électrique 200, lesdits moyens de retenue 220 et lesdits moyens de blocage 241 sont distincts les uns des autres.

Plus particulièrement, comme le montrent les figures 3, 8 et 9, lesdits moyens de blocage du connecteur électrique 200 comprennent au moins une nervure 241 prévue en saillie d'une paroi de guidage 240 disposée en avant dudit bornier 230, le long de celui-ci.

Cette paroi de guidage 240 porte en saillie deux nervures 241 alignées suivant un arc de cercle et espacées l'une de l'autre d'un angle égal à environ 20 degrés.

Chacune de ces nervures 241 est adaptée à être coincée par coulissement dans une des rainures 121 prévue en correspondance dans ladite paroi de guidage 120 de la boîte 100 (voir figure 9).

Préférentiellement, la paroi de guidage 240 du connecteur électrique 200 s'étend selon un arc de cercle.

En particulier, les parois de guidage 120, 240 de la boîte 100 et du connecteur électrique 200 s'étendent suivant le même arc de cercle car elles sont destinées à glisser l'une sur l'autre lors du pivotement du connecteur électrique 200 dans l'ouverture 110 de la boîte 100 pour guider ledit connecteur dans son déplacement et éviter tout mouvement parasite.

Ainsi, avantageusement, comme le montrent les figures 4 à 9, le connecteur électrique 200 est monté sur la face externe 101A du fond 101 de la boîte 100, de manière à centrer le bornier 230 sur un diamètre X1 de la boîte 100 (voir figure 4). Puis, il peut être pivoté vers la droite, selon la flèche F sur la figure 4, d'un angle A1 d'environ 20 degrés (ici égal à 19,5 degrés) autour de l'axe R pour amener le bornier 230 dans une position déterminée, centré sur un autre diamètre X2 de la boîte 100. Dans cette deuxième position, ledit connecteur électrique 200 est bloqué temporairement sur le fond 101 par coincement de ses nervures 241 dans les rainures 121 correspondantes de la boîte 100.

Dans cette position bloquée, le connecteur électrique 200 est adapté à être connecté à un mécanisme d'appareillage 300 spécialement adapté à une telle connexion rapide et rapporté dans l'espace intérieur de la boîte 100.

Avantageusement, la boîte 100 comporte sur la face intérieure 102B de sa paroi latérale 102, de part et d'autre de l'ouverture 110 de son fond 101, deux puits 140 à section allongée pour le vissage de vis V de fixation d'un support d'appareillage 400 à rapporter à l'avant de ladite boîte 100 (voir figures 10 et 13).

Comme le montrent les figures 10 à 12, un tel support d'appareillage 400 se présente classiquement sous la forme d'un cadre de faible épaisseur, dont le bord intérieur 401 délimite une ouverture centrale, ici de forme carrée, destinée à recevoir le socle 310 isolant du mécanisme d'appareillage 300 (voir figure 11).

Le support d'appareillage 400 comporte, le long d'au moins une partie de son bord intérieur 401, une nervure 402 qui fait saillie du côté de la face arrière du support tournée vers l'espace intérieur de la boîte 100. Cette nervure 402 sert à l'accrochage du socle 310 du mécanisme d'appareillage 300 par l'intermédiaire de dents d'accrochage 311 et d'un contre-rebord 312 prévus sur le socle 310 (voir figure 12).

Le support d'appareillage 400 comporte également, de manière classique, dans chacune de ses branches, des moyens d'encliquetage 403 d'une plaque de finition (non représentée).

Le mécanisme d'appareillage 300 est ici un mécanisme de prise de courant, mais il pourrait s'agir d'un mécanisme d'interrupteur ou encore d'un mécanisme de va-et-vient.

Ce mécanisme d'appareillage 300 comporte un socle 310 isolant renfermant des pinces conductrices 301 formant des alvéoles de réception de broches d'une fiche électrique (non représentée). Le socle 310 loge également le pied d'une broche de terre 302 qui émerge dans le puits de réception de la prise de courant formé par un enjoliveur rapporté sur ce socle 310.

Selon une caractéristique essentielle, le socle 310 de ce mécanisme d'appareillage 300 comprend, à l'arrière, des moyens de réception 320 du bornier 230 du connecteur électrique 200 décrit ci-dessus (voir figures 11 et 12).

Selon le mode de réalisation représenté sur les figures, ces moyens de réception comprennent un logement 320 d'accueil dudit bornier 230.

Le logement 320 est défini à l'intérieur d'une cassette parallélépipédique dont les dimensions sont ajustées à celles du bloc parallélépipédique du bornier 230. Ce logement 320 est délimité latéralement par des parois latérales 321 et il est ouvert vers l'arrière du socle 310 pour permettre l'introduction du bornier 230 à l'intérieur de celui-ci.

La direction d'introduction du bornier 230 du connecteur électrique 200 dans le logement 320 du socle 310 du mécanisme d'appareillage 300 est la direction de l'axe Z du puits de réception de la prise de courant selon lequel s'étend la broche de terre 302. Cet axe Z est également l'axe selon lequel le socle 310 du mécanisme d'appareillage 300 est introduit dans la boîte 100. Cet axe Z est parallèle à l'axe Y selon lequel s'étendent les conduits 231 du bornier 230 du connecteur électrique 200.

Les pinces conductrices 301 et la broche de terre 302 du mécanisme d'appareillage 300 sont chacune reliées à une broche conductrice 305 plate qui s'étend dans ledit logement 320 selon l'axe Z (voir figure 11).

Lesdites broches conductrices 305 plates sont agencées de manière qu'elles s'introduisent dans les conduits 231 correspondants du bornier 230 lorsque celui-ci est engagé dans ledit logement 320 du socle 310 du mécanisme d'appareillage 300 afin d'établir un contact électrique avec les lames conductrices 21, 22, 23 du bornier 230.

Avantageusement, lesdits moyens de réception 320 du socle 310 comprennent des moyens de guidage 322 à coulissement dudit bornier 230.

Ces moyens de guidage comprennent deux rainures 322 prévues en vis-à-vis sur la face intérieure de deux des parois latérales 321 parallèles de ladite cassette du socle 310 du mécanisme d'appareillage 300.

Ces deux rainures 322 s'étendent parallèlement à l'axe Z du puits de réception du mécanisme d'appareillage 300.

En correspondance, ledit bornier 230 du connecteur électrique 200 comporte sur deux côtés latéraux 230A parallèles, deux nervures 232 agencées pour coulisser dans les rainures 322 du socle 310 du mécanisme d'appareillage 300 (voir figure 12).

De cette manière, le bornier 230 du connecteur électrique 200 est correctement guidé dans le logement 320 d'accueil du socle 310 du mécanisme d'appareillage 300 pour que lesdites broches conductrices 305 plates reliées aux composants électriques du mécanisme d'appareillage 300 s'engagent sans coincement dans les conduits 231 correspondants du bornier 230.

Par ailleurs, préférentiellement, le bornier 230 comporte des moyens d'accrochage 233 adaptés à coopérer avec des moyens d'accrochage complémentaires prévus à l'arrière du socle 310 du mécanisme d'appareillage 300. Lesdits moyens d'accrochage du socle 310 comprennent une dent d'accrochage (non visible sur les figures) adaptée à s'accrocher sur un bord d'une fenêtre 233 prévue sur une paroi longitudinale 230B du bornier 230.

Enfin, comme le montrent plus particulièrement les figures 2 et 12, avantageusement, l'enveloppe isolante du connecteur électrique 200 forme, en avant dudit bornier 230, un autre bornier 250, appelé bornier de repiquage, qui s'étend selon l'axe X dudit manchon 210 en prolongement de ce dernier.

Ledit bornier de repiquage 250 est un bloc qui comprend plusieurs (ici trois) conduits 251 parallèles entre eux, s'étendant suivant l'axe X dudit manchon. Ces conduits 251 débouchent à l'extérieur de ladite enveloppe isolante et communiquent avec l'intérieur dudit manchon 210. Chaque conduit 251 du bornier de repiquage 250 loge une lame conductrice 40 qui est liée électriquement à une lame conductrice 21, 22, 23 d'un conduit 231 du premier bornier 230 accessible via un conduit 212 dudit manchon 210.

Grâce au bornier de repiquage 250, un installateur peut connecter électriquement un autre appareillage électrique audit connecteur électrique 200 rapporté sur la face externe 101A du fond 101 de ladite boîte 100. Il suffit qu'il introduise les âmes dénudées des conducteurs d'un câble électrique alimentant ledit appareillage, dans les conduits 251 dudit bornier de repiquage 250 pour que celles-ci viennent au contact des lames conductrices 40.

La boîte 100 est avantageusement réalisée d'une seule pièce par moulage d'une matière synthétique.

L'enveloppe isolante du connecteur électrique 200 est avantageusement réalisée par moulage d'une matière synthétique.

Enfin, le socle 310 du mécanisme d'appareillage 300 pourvu de ses moyens de réception est avantageusement réalisé d'une seule pièce par moulage d'une matière synthétique.

En référence aux figures 4, 7, 10 à 15, nous allons maintenant décrire, d'une part, l'assemblage de la boîte 100 et du connecteur électrique 200, d'autre part, la connexion rapide du mécanisme d'appareillage 300 avec le connecteur électrique 200 ainsi que le réglage d'aplomb et de hauteur du mécanisme d'appareillage 300 par rapport à la paroi d'encastrement.

Le connecteur électrique 200 est préalablement emmanché sur le câble électrique 10 du réseau d'alimentation de manière que les âmes dénudées de ses conducteurs 11, 12, 13 soient introduites dans les conduits 212 du manchon 210 et placées au contact des extrémités 31, 32, 33 des lames conductrices 21, 22, 23.

Puis le connecteur électrique 200 est assemblé par l'arrière à la boîte 100, avant que celle-ci ne soit encastrée dans le trou d'encastrement (non représenté) formé dans la paroi d'encastrement (non représentée).

Plus particulièrement, le connecteur électrique 200 est monté sur la face externe 101A du fond 101 de la boîte 100, de manière à centrer le bornier 230 sur un diamètre X1 de la boîte 100 (voir figure 4).

Le montage du connecteur électrique 200 s'effectue en engageant à force les pattes 221 de ses moyens de montage 220 au travers de l'orifice 130 circulaire de la boîte 100.

Lors du montage, les pans inclinés extérieurs des dents d'accrochage 222 portées par lesdites pattes 221 glissent contre le bord dudit orifice 130 et provoquent le fléchissement progressif desdites pattes 221 l'une vers l'autre pour permettre le passage des dents d'accrochage 222 au travers de l'orifice 130 du fond 101 de la boîte 100.

Lorsque lesdites dents d'accrochage 222 ont traversé l'orifice 130 du fond 101 de la boîte 100, les pattes 221 reviennent élastiquement dans leur position initiale parallèles l'une à l'autre et le plot rigide 223 prévu à la base des pattes 221 s'engage dans l'orifice 130 jusqu'à ce que la face externe 211 du manchon 210 vienne au contact de la face externe 101A du fond 101 de la boîte 100.

Dans cette position de montage, le bornier 230 du connecteur électrique 200 émerge dans l'espace intérieur de la boîte 100 au travers de l'ouverture 110 prévue dans le fond 101. Le bornier 230 s'étend perpendiculairement au fond 101 de la boîte 100, parallèlement à l'axe R de pivotement dudit connecteur électrique 200.

Le plot rigide 223 forme un tourillon de pivotement dans ledit orifice 130 pour autoriser le déplacement du connecteur électrique 200 dans ladite ouverture 110 parallèlement au plan du fond 101 de la boîte 100. Le connecteur électrique 200 peut prendre alors plusieurs positions angulaires déterminées autour de l'axe R (voir figures 4 et 7).

Puis, le connecteur électrique 200 est pivoté vers la droite, selon la flèche F sur la figure 4, d'un angle A1 d'environ 20 degrés (ici égal à 19,5 degrés) autour de l'axe R, pour amener le bornier 230 dans une position déterminée, centré sur un autre diamètre X2 de la boîte 100. Dans cette deuxième position représentée sur la figure 7, le connecteur électrique 200 est bloqué temporairement sur le fond 101 par coincement de ses nervures 241 dans les rainures 121 correspondantes de la boîte 100.

Dans cette position bloquée, le connecteur électrique 200 est adapté à être connecté au mécanisme d'appareillage 300.

La boîte 100 équipée du connecteur électrique 200 bloqué temporairement, est encastrée dans le trou d'encastrement prévu dans la paroi d'encastrement de telle manière que ses oreilles 104 appuient contre la face avant de ladite paroi d'encastrement.

Comme le montrent les figures 10 à 12, le socle 310 du mécanisme d'appareillage 300 monté dans l'ouverture centrale du support d'appareillage 400 est alors rapporté dans l'espace intérieur de la boîte 100 encastrée, selon l'axe Z du puits de réception de la prise de courant.

Le logement 320 du socle 310 est engagé sur le bornier 230 du connecteur électrique 200 de manière que les nervures 232 du bornier 230 coulissent dans les rainures 322 correspondantes du socle 310 jusqu'à ce que la dent d'accrochage du socle 310 s'accroche sur le bord de la fenêtre 233 du bornier 230.

Dans cette position accrochée, les broches conductrices 305 plates du socle 310, reliées aux pinces conductrices 301 et à la broche de terre 302 du mécanisme d'appareillage 300, sont introduites dans les conduits 231 du bornier 230 et sont placées au contact des lames conductrices 21, 22, 23 de ces derniers.

Le mécanisme d'appareillage 300 est connecté électriquement au connecteur électrique 200.

Toutefois, dans cette position connectée, comme le montre la figure 10, le support d'appareillage 400, équipé du mécanisme d'appareillage 300 connecté électriquement au connecteur électrique 200, est décalé d'un angle d'environ 20 degrés (égal à 19, 5 degrés) par rapport à l'horizontale H. En outre, comme le montrent les figures 11 et 12, la face arrière du support d'appareillage 400 est placée à une distance D d'environ 5 millimètres au-dessus du rebord 103 de la boîte 100 encastrée.

Le support d'appareillage 400 équipé du mécanisme d'appareillage 300 est alors pivoté selon la flèche F1 (sur la figure 10) autour de l'axe R, pour libérer les nervures 241 du connecteur électrique 200 des rainures 121 de la boîte 100 et rendre libre de mouvement ledit connecteur électrique 200 dans l'ouverture 110 de la boîte afin d'ajuster la position du support d'appareillage 400 sur l'horizontale H (voir figure 13).

Puis, le support d'appareillage 400 et le mécanisme d'appareillage 300 sont enfoncés dans ladite boîte 100 jusqu'à ce que la face arrière du support d'appareillage 400 vienne en appui contre le rebord 103 de la boîte 100 encastrée ou contre un éventuel revêtement (tapisserie ou moquette) placé en surépaisseur sur la face avant de la paroi d'encastrement.

Lors de ce mouvement d'ajustement en hauteur du support d'appareillage 400, le bornier 230 du connecteur électrique 200 est poussé vers l'extérieur de la boîte 100, et le plot rigide 223 est coulissé dans ledit orifice 130, selon son axe R perpendiculaire au plan du fond 101. La face externe 211 du manchon 210 du connecteur électrique 200 n'est plus en contact avec la face externe 101A du fond 101 de ladite boîte 100 et le connecteur électrique 200 prend alors une position parallèle au plan de la face externe 101A du fond 101, représentée sur les figures 14 et 15, dans laquelle les dents d'accrochage 222 des moyens de montage 220 du connecteur électrique 200 sont en appui contre la face intérieure 101B du fond 101 de la boîte 100 sur le bord de l'orifice 130 afin de retenir le connecteur électrique 200 sur la boîte 100.

Cette retenue du connecteur électrique 200 sur la boîte 100 est particulièrement avantageuse car un installateur peut intervenir ultérieurement sur l'ensemble électrique pour démonter le mécanisme d'appareillage 300 afin de le réparer ou de le changer sans perdre le connecteur électrique 200 dans la partie creuse de la paroi d'encastrement.

Finalement, une fois que les ajustements d'aplomb et de profondeur du support d'appareillage 400 ont été réalisés, il ne reste plus qu'à visser les vis V du support d'appareillage 400 dans les puits 140 correspondants de la boîte 100 pour lier ledit support à cette dernière.

La section allongée (ici oblongue) de ces puits 140 permet d'ajuster la position angulaire du support d'appareillage 400 sur ladite boîte 100 comme cela a été décrit ci-dessus, tout en laissant les vis V liées audit support.

La présente invention n'est nullement limitée au mode de réalisation décrit et représenté, mais l'homme du métier saura y apporter toute variante conforme à son esprit.

Selon une variante non représentée de la boîte conforme à l'invention, on pourrait prévoir que le déplacement du connecteur électrique, autorisé par lesdits moyens de retenue de la boîte, soit une translation.

Dans ce cas, lesdits moyens de retenue de la boîte pourraient comprendre des rainures qui bordent deux bords opposés de ladite ouverture.

Selon une autre variante de la boîte non représentée, on pourrait prévoir que lesdits moyens de retenue comprennent un élément mâle placé à proximité d'un bord de ladite ouverture et adapté à recevoir un élément femelle prévu sur ledit connecteur électrique.

On pourrait également prévoir, en variante, que ledit bornier comprenne, à la place du bloc parallélépipédique à conduits creux, un logement parallélépipédique qui loge plusieurs broches parallèles entre elles, ce logement débouchant à l'extérieur de ladite enveloppe isolante et communiquant à l'intérieur de celle-ci avec ledit manchon.

Ledit élément mâle prévu sur le connecteur électrique peut comprendre au moins une nervure adaptée à coulisser dans une rainure de la boîte d'encastrement.

Enfin, lesdits moyens de montage du connecteur électrique sur ladite boîte peuvent comprendre un élément femelle adapté à recevoir un élément mâle prévu sur la boîte d'encastrement.

## Revendications

1. Boîte (100) d'encastrement d'un appareillage électrique, comprenant un fond (101) qui délimite, à l'arrière, un espace intérieur de réception d'un socle de mécanisme d'appareillage, ce fond (101) étant pourvu d'une ouverture (110) destinée à accueillir, par l'arrière de ladite boîte, un connecteur électrique (200) de sorte qu'une partie (230) de ce connecteur émerge dans ledit espace intérieur, boîte d'encastrement dans laquelle ledit fond (101) comporte des moyens de retenue (130) adaptés à lier ledit connecteur électrique audit fond tout en autorisant un déplacement dudit connecteur électrique (200) dans ladite ouverture (110) par rapport audit fond (101).

2. Boîte (100) d'encastrement selon la revendication 1, dans laquelle le déplacement autorisé par lesdits moyens de retenue (130) est un déplacement dans un plan parallèle au plan formé par ledit fond (101).

3. Boîte (100) d'encastrement selon la revendication précédente, dans laquelle le déplacement autorisé par lesdits moyens de retenue (130) est un pivotement autour d'un axe (R) perpendiculaire au plan formé par ledit fond (101).

4. Boîte d'encastrement selon la revendication 2, dans laquelle le déplacement autorisé par lesdits moyens de retenue est une translation.

5. Boîte (100) d'encastrement selon l'une des revendications précédentes, dans laquelle le déplacement autorisé par lesdits moyens de retenue (130) est une translation suivant une direction (R) perpendiculaire au plan formé par ledit fond (101).

6. Boîte (100) d'encastrement selon l'une des revendications 1 à 5, dans laquelle lesdits moyens de retenue comprennent au moins un élément femelle (130) placé à proximité d'un bord (111) de ladite ouverture (110) et adapté à recevoir un élément mâle (220) prévu sur ledit connecteur électrique (200).

7. Boîte (100) d'encastrement selon la revendication précédente, dans laquelle l'élément femelle est un orifice (130) traversant le fond (101) de ladite boîte.

8. Boîte d'encastrement selon la revendication 6, dans laquelle lesdits moyens de retenue comprennent des rainures qui bordent deux bords opposés de ladite ouverture.

9. Boîte d'encastrement selon l'une des revendications 1 à 5, dans laquelle lesdits moyens de retenue comprennent un élément mâle placé à proximité d'un bord de ladite ouverture et adapté à recevoir un élément femelle prévu sur ledit connecteur électrique.

10. Boîte (100) d'encastrement selon l'une des revendications précédentes, dans laquelle il est prévu des moyens de blocage (121) dudit connecteur électrique dans une position déterminée par rapport au fond (101).

11. Boîte (100) d'encastrement selon la revendication précédente, dans laquelle lesdits moyens de retenue (130) et lesdits moyens de blocage (121) sont distincts les uns des autres.

12. Boîte (100) d'encastrement selon l'une des deux revendications précédentes, dans laquelle lesdits moyens de blocage comprennent au moins une rainure (121) disposée sur un bord (112) de ladite ouverture (110), adaptée à recevoir une nervure (241) prévue en saillie sur ledit connecteur électrique (200).

13. Boîte (100) d'encastrement selon la revendication précédente, dans laquelle chaque rainure (121) est formée en creux dans une paroi de guidage (120) prévue sur ledit fond (101), à l'intérieur de ladite boîte d'encastrement, le long d'au moins une partie du bord (112) de ladite ouverture (110) pour guider ledit connecteur électrique (200) lors de son déplacement.

14. Boîte (100) d'encastrement selon l'une des quatre revendications précédentes, dans laquelle ladite ouverture (110) prévue dans ledit fond (101) comporte un bord (112) en arc de cercle le long duquel sont disposés lesdits moyens de blocage (121).

15. Boîte (100) d'encastrement selon l'une quelconque des revendications précédentes, qui comporte au moins une paroi latérale (102) qui s'élève sensiblement perpendiculairement audit fond (101) pour délimiter latéralement ledit espace intérieur et dans laquelle il est prévu sur la face intérieure (102B) de ladite paroi latérale, de part et d'autre de ladite ouverture, deux puits (140) à section allongée pour le vissage de vis (V) de fixation d'un support d'appareillage (400) à rapporter à l'avant de ladite boîte.

16. Boîte (100) d'encastrement selon l'une des revendications précédentes, qui est réalisée d'une seule pièce par moulage d'une matière synthétique.

17. Connecteur électrique (200) comprenant, d'une part, une enveloppe isolante qui forme d'une seule pièce, à l'arrière, un manchon (210) d'axe X de réception d'une extrémité d'un câble électrique (10) et, à l'avant, un bornier (230) qui s'étend globalement sensiblement perpendiculairement à l'axe X dudit manchon (210), et, d'autre part, des moyens de montage (220), prévus sur la face externe de ladite enveloppe, adaptés à coopérer avec lesdits moyens de retenue (130) de la boîte (100) d'encastrement selon l'une des revendications précédentes, pour le montage dudit connecteur électrique (200) sur la face externe (101A) du fond (101) de ladite boîte (100) de telle manière que ledit bornier (230) émerge via ladite ouverture (110) prévue dans le fond (101) de la boîte dans l'espace intérieur de ladite boîte (100).

18. Connecteur électrique (200) selon la revendication précédente, dans lequel le bornier (230) est un bloc qui comprend plusieurs conduits (231) parallèles entre eux, s'étendant sensiblement perpendiculairement à l'axe X dudit manchon (210), ces conduits (231) débouchant à l'extérieur de ladite enveloppe isolante et communiquant à l'intérieur de ladite enveloppe isolante avec l'intérieur dudit manchon (210).

19. Connecteur électrique selon la revendication 17, dans lequel ledit bornier comprend un logement parallélépipédique qui loge plusieurs broches parallèles entre elles, sensiblement perpendiculaires à l'axe X dudit manchon, ce logement débouchant à l'extérieur de ladite enveloppe isolante et communiquant à l'intérieur de ladite enveloppe isolante avec l'intérieur dudit manchon.

20. Connecteur électrique (200) selon l'une des trois revendications précédentes, dans lequel lesdits moyens de montage comprennent un élément mâle (220).

21. Connecteur électrique (200) selon la revendication précédente, dans lequel ledit élément mâle comprend deux pattes (221) parallèles s'étendant sensiblement perpendiculairement à l'axe X dudit manchon (210) et dont les faces externes tournées à l'opposé l'une de l'autre portent, à proximité de l'extrémité libre desdites pattes, une dent d'accrochage (222).

22. Connecteur électrique (200) selon la revendication précédente, dans lequel lesdites pattes (221) présentent une base solidarisée à un plot rigide (223).

23. Connecteur électrique selon la revendication 20, dans lequel ledit élément mâle comprend au moins une nervure adaptée à coulisser dans une rainure de ladite boîte d'encastrement.

24. Connecteur électrique selon l'une des revendications 17 à 19, dans lequel lesdits moyens de montage comprennent un élément femelle.

25. Connecteur électrique (200) selon l'une des revendications 17 à 24, dans lequel il est prévu des moyens de blocage (241) dudit connecteur placé dans une position déterminée dans ladite ouverture (110) du fond (101) de ladite boîte (100) d'encastrement.

26. Connecteur électrique (200) selon la revendication précédente, dans lequel lesdits moyens de retenue (220) et lesdits moyens de blocage (241) sont distincts les uns des autres.

27. Connecteur électrique (200) selon l'une des deux revendications précédentes, dans lequel lesdits moyens de blocage comprennent au moins une nervure (241) prévue en saillie d'une paroi de guidage (240) disposée en avant dudit bornier (230), le long de celui-ci, cette nervure (241) étant adaptée à être coincée par coulissement dans une rainure (121) prévue en correspondance dans ladite boîte (100) d'encastrement.

28. Connecteur électrique (200) selon la revendication précédente, dans lequel ladite paroi de guidage (240) s'étend selon un arc de cercle.

29. Connecteur électrique (200) selon l'une des revendications 17 à 28, dans lequel ledit bornier (230) comporte sur deux côtés latéraux (230A) parallèles des moyens de coulissement (232) adaptés à coopérer avec des moyens de coulissement (322) complémentaires prévus à l'arrière d'un socle (310) de mécanisme d'appareillage introduit dans l'espace intérieur de ladite boîte (100) d'encastrement.

30. Connecteur électrique (200) selon l'une des revendications 17 à 29, dans lequel ledit bornier (230) comporte des moyens d'accrochage (233) adaptés à coopérer avec des moyens d'accrochage complémentaires prévus à l'arrière d'un socle (310) de mécanisme d'appareillage introduit dans l'espace intérieur de ladite boîte d'encastrement.

31. Connecteur électrique (200) selon l'une des revendications 17 à 30, dans lequel il est prévu en avant dudit bornier, un autre bornier (250), appelé bornier de repiquage, qui s'étend selon l'axe X dudit manchon (210) en prolongement de ce dernier.

32. Connecteur électrique (200) selon la revendication précédente, dans lequel ledit bornier de repiquage (250) est un bloc qui comprend plusieurs conduits (251) parallèles entre eux, s'étendant suivant l'axe X dudit manchon (210), ces conduits débouchant à l'extérieur de ladite enveloppe isolante et communiquant avec l'intérieur dudit manchon (210).

33. Connecteur électrique (200) selon l'une des revendications 17 à 32, dans lequel son enveloppe isolante est réalisée d'une seule pièce par moulage d'une matière synthétique.

34. Mécanisme d'appareillage (300) qui comporte un socle (310) isolant renfermant des composants électriques et comprenant à l'arrière des moyens de réception (320) du bornier (230) du connecteur électrique (200) selon l'une des revendications 17 à 33.

35. Mécanisme d'appareillage (300) selon la revendication précédente, dans lequel lesdits moyens de réception comprennent un logement (320) d'accueil dudit bornier (230).

36. Mécanisme d'appareillage (300) selon l'une des deux revendications précédentes, dans lequel lesdits moyens de réception (320) comprennent des moyens de guidage (322) à coulissement dudit bornier (230).

37. Mécanisme d'appareillage (300) selon la revendication précédente, dans lequel lesdits moyens de guidage comprennent au moins une rainure (322) adaptée à recevoir par coulissement une nervure (232) prévue sur ledit bornier (230).

38. Mécanisme d'appareillage (300) selon l'une des quatre revendications précédentes, dans lequel lesdits moyens de réception comprennent des moyens de retenue du bornier (230) à l'arrière du socle.

39. Mécanisme d'appareillage (300) selon la revendication précédente, dans lequel lesdits moyens de retenue comprennent des moyens d'accrochage du bornier (230).

40. Mécanisme d'appareillage (300) selon la revendication précédente, dans lequel lesdits moyens d'accrochage comprennent une dent d'accrochage adaptée à s'accrocher sur un bord d'une fenêtre (233) prévue sur le bornier (230).

41. Mécanisme d'appareillage (300) selon l'une des revendications 34 à 40, dans lequel ledit socle (310) pourvu de ses moyens de réception (320) est réalisé d'une seule pièce par moulage d'une matière synthétique.

42. Ensemble électrique comprenant une boîte (100) d'encastrement selon l'une des revendications 1 à 16, un connecteur électrique (200) selon l'une des revendications 17 à 33 emmanché sur une extrémité d'un câble électrique (10) d'alimentation, à rapporter par l'arrière de ladite boîte (100) d'encastrement dans ladite ouverture (110) dudit fond (101) de telle manière que ledit connecteur est retenu sur la face externe (101A) dudit fond (101) par la coopération des moyens de montage (220) dudit connecteur avec lesdits moyens de retenue (130) de ladite boîte (100), et un mécanisme d'appareillage (300) selon l'une des revendications 34 à 40 dont le socle (310) est adapté, d'une part, à être monté sur un support d'appareillage (400) à rapporter à l'avant de ladite boîte (100) d'encastrement, et, d'autre part, à être engagé dans l'espace intérieur de ladite boîte (100) d'encastrement de façon à recevoir à l'arrière ledit bornier (230) du connecteur électrique (200).
